**Europäisches Patentamt**

**European Patent Office**

**Office européen des brevets**

(19)

(11) Veröffentlichungsnummer: **0 263 525 B1**

(12) # EUROPÄISCHE PATENTSCHRIFT

(45) Veröffentlichungstag der Patentschrift: **11.12.91**

(51) Int. Cl.5: **C08F 4/62**, C08F 10/02

(21) Anmeldenummer: **87114744.3**

(22) Anmeldetag: **09.10.87**

(54) **Verfahren zum Herstellen von Homo- sowie Copolymerisaten des Ethens mittels eines Chromtrioxid-Katalysators.**

(30) Priorität: **10.10.86 DE 3634534**

(43) Veröffentlichungstag der Anmeldung:
**13.04.88 Patentblatt 88/15**

(45) Bekanntmachung des Hinweises auf die Patenterteilung:
**11.12.91 Patentblatt 91/50**

(84) Benannte Vertragsstaaten:
**AT BE DE FR GB IT NL**

(56) Entgegenhaltungen:
**EP-A- 0 135 090**
**FR-A- 2 323 706**
**US-A- 2 887 471**

(73) Patentinhaber: **BASF Aktiengesellschaft**
**Carl-Bosch-Strasse 38**
**W-6700 Ludwigshafen(DE)**

(72) Erfinder: **Konrad, Rainer, Dr.**
**Gartenweg 7**
**W-6701 Goennheim(DE)**
Erfinder: **Hemmerich, Rainer, Dr.**
**Veilchenweg 9**
**W-6718 Gruenstadt(DE)**
Erfinder: **Mueller-Mall, Rudolf, Dr.**
**Ulmenweg 39**
**W-6708 Neuhofen(DE)**
Erfinder: **Schweier, Guenther, Dr.**
**Friedrich-Pietzsch-Strasse 14**
**W-6701 Friedelsheim(DE)**

## Beschreibung

Die vorliegende Erfindung liegt im Rahmen eines Verfahrens zum Herstellen von Ethen-Homopolymerisaten sowie Ethen-Copolymerisaten mit untergeordneten Mengen an einpolymerisierten $C_3$- bis $C_{12}$-, insbesondere $C_3$- bis $C_8$-$\alpha$-Monoolefinen durch Polymerisation des bzw. der Monomeren bei Temperaturen von 30 bis 150, insbesondere 60 bis 120°C und Drücken von 2 bis 150, insbesondere von 5 bis 60 bar, mittels eines Chromtrioxid-Katalysators, der erhalten wird, indem man

(1) einen feinteiligen, porösen, aus Siliziumdioxid bestehenden bzw. auf Siliziumdioxid basierenden Trägerstoff mit

(2) Chromtrioxid oder einer unter den Bedingungen der Stufe (3) in Chromtrioxid übergehenden Chromverbindung im Gewichtsverhältnis Trägerstoff : Chrom von 100 : 0,1 bis 100 : 10, insbesondere von 100 : 0,3 bis 100 : 3, belädt, und dann

(3) das aus Stufe (2) resultierende Zwischenprodukt in einem wasserfreien, Sauerstoff in einer Konzentration von über 10 Volumenprczent enthaltenden Gasstrom 10 bis 1000, insbesondere 60 bis 300 Minuten auf einer Temperatur von 400 bis 1100, insbesondere 700 bis 950°C, hält.

Bei diesem Verfahren ist es wichtig, daß Schwankungen in der Produktivität, d.h. in der Ausbeute an Polymerisat, bezogen auf die eingesetzte Menge an Katalysator, wie sie etwa durch Verunreinigungen der Einsatzstoffe auftreten können, weitgehend vermieden werden, da diese die Eigenschaften des Polymerisats in ungewollter und unkontrollierbarer Weise beeinflussen. Weiterhin ist es wünschenswert, die Molmasse des Polymerisats entsprechend dem geforderten Eigenschaftsprofil der Fertigteile unabhängig von der Produktivität einzustellen, eine Forderung, die aufgrund der bei Chromtrioxid-Katalysatoren bekannten Abhängigkeit der Produktivität und der Molmassenregelbarkeit von der Aktivierungstemperatur sowie der bekannterweise schlechten Regelbarkeit der Molmasse mittels Wasserstoff nur unzureichend erfüllbar ist. Schließlich können die vor Beginn der Polymerisation zur Reduktion des Chromtrioxid-Katalysators benötigte Induktionszeit sowie die Empfindlichkeit des Katalysators gegenüber Verunreinigungen der Einsatzstoffe zu Schwierigkeiten beim Anfahren von Polymerisationsreaktoren führen.

Es ist bekannt, daß durch Einsatz von aluminiumorganischen Verbindungen, wie Dialkylaluminiumalkoxiden oder Alumoxanen, als Cokatalysatoren bei der Polymerisation mit Chromtrioxid-Katalysatoren sowohl eine weitgehend konstante und insgesamt höhere Produktivität als auch eine hinreichende Beeinflussung der Molmasse durch Wasserstoff möglich ist.

Verfahren dieser Art sind z.B. in den DE-OSen 33 29 015 und 33 29 016 repräsentativ beschrieben.

Diese Verfahren haben - ebenso wie in Parallele zu setzende vergleichbare andere Polymerisationsverfahren - den Nachteil, daß die erhaltenen Polymerisate ungünstige morphologische Eigenschaften, z.B. einen hohen Staubanteil oder ein niedriges Schüttgewicht, besitzen, was für die technische Beherrschung der Polymerisationssysteme, die Aufarbeitung der Polymerisate und/oder die Verarbeitbarkeit der Polymerisate nachteilig sein kann.

Hier setzte die Aufgabe an, die zur vorliegenden Erfindung geführt hat: das Verfahren der eingangs definierten Art mit einem Chromtrioxid-Katalysator so weiterzubilden, daß bei gleichbleibend hoher Produktivität Polymerisate mit geeigneten morphologischen Eigenschaften und einer sehr hohen bis mittleren, durch Wasserstoff regelbaren Molmasse, hergestellt werden können sowie ein problemloses Anspringen der Polymerisation im Reaktor ermöglicht wird.

Es wurde gefunden, daß diese Aufgabe gelöst werden kann, wenn man das in Rede stehende Verfahren unter zusätzlicher Mitverwendung eines Lithiumalkyls als Cokatalysator durchführt.

Gegenstand der vorliegenden Erfindung ist dementsprechend ein Verfahren zum Herstellen von Ethen-Homopolymerisaten sowie Ethen-Copolymerisaten mit untergeordneten Mengen an einpolymerisierten $C_3$- bis $C_{12}$-, insbesondere $C_3$- bis $C_8$-$\alpha$-Monoolefinen durch Polymerisation des bzw. der Monomeren bei Temperaturen von 30 bis 150, insbesondere 60 bis 120°C und Drücken von 2 bis 150, insbesondere von 5 bis 60 bar, mittels eines Chromtrioxid-Katalysators, der erhalten wird, indem man

(1) einen feinteiligen, porösen, aus Siliziumdioxid bestehenden bzw. auf Siliziumdioxid basierenden Trägerstoff mit

(2) Chromtrioxid oder einer unter den Bedingungen der Stufe (3) in Chromtrioxid übergehenden Chromverbindung im Gewichtsverhältnis Trägerstoff : Chrom von 100 : 0,1 bis 100 : 10, insbesondere von 100 : 0,3 bis 100 : 3, belädt, und dann

(3) das aus Stufe (2) resultierende Zwischenprodukt in einem wasserfreien, Sauerstoff in einer Konzentration von über 10 Volumenprozent enthaltenden Gasstrom 10 bis 1000, insbesondere 60 bis 300 Minuten auf einer Temperatur von 400 bis 1100, insbesondere 700 bis 950°C, hält.

Das erfindungsgemäße Verfahren ist dadurch gekennzeichnet, daß zusätzlich zum Chromtrioxid-Katalysator ein Cokatalysator eingesetzt wird, der besteht aus einem Lithiumalkyl der Formel LiR, worin R steht für eine $C_2$- bis $C_6$-, insbesondere

eine $C_2$- bis $C_4$-Alkylgruppe, und vor allem die n-Butyl-, sec.-Butyl- bzw. tert.-Butylgruppe, mit der Maßgabe, daß das Atomverhältnis Chrom im Chromtrioxid-Katalysator : Lithium im Cokatalysator 1 : 0,05 bis 1 : 100, insbesondere 1 : 0,1 bis 1 : 50, beträgt.

Wie sich gezeigt hat, läßt sich das erfindungsgemäße Verfahren mit besonderem Erfolg durchführen, wenn ein Chromtrioxid-Katalysator eingesetzt wird, der auf einem Trägerstoff (1) basiert, den man erhält, indem man

(1.1) von einem 10 bis 25, vorzugsweise 12 bis 20 und insbesondere 14 bis 20 Gew.-% Feststoff (berechnet als Siliziumdioxid) enthaltenden Kieselsäure-Hydrogel ausgeht, das weitgehend kugelförmig ist, einen Teilchendurchmesser im Bereich von 1 bis 8, insbesondere 2 bis 6 mm hat und erhalten wird, indem man

(1.1.1) in einen unter Drall stehenden Strom einer wäßrigen Mineralsäure längs sowie tangential zum Strom eine Natrium- bzw. Kaliumwasserglaslösung einbringt,

(1.1.2) das dabei entstehende Kieselsäure-Hydrosol in eine gasförmiges Medium tropfenförmig versprüht,

(1.1.3) das versprühte Hydrosol in dem gasförmigen Medium zum Hydrogel erstarren läßt und

(1.1.4) das so erhaltene weitgehend kugelförmige Hydrogel ohne vorherige Alterung durch Waschen von Salzen befreit,

(1.2) aus dem Hydrogel (1.1) mittels einer organischen Flüssigkeit aus der Reihe der $C_1$- bis $C_4$-Alkanole und/oder $C_3$- bis $C_5$-Alkanone mindestens 60 %, insbesondere mindestens 90 % des in dem Hydrogel enthaltenen Wassers extrahiert,

(1.3) das dabei erhaltene entwässerte, mit der organischen Flüssigkeit behandelte Gel solange trocknet, bis bei 180 °C unter einem Vakuum von 10 Torr während 30 Minuten kein Gewichtsverlust mehr auftritt (Xerogel-Bildung) und

(1.4) das so gewonnene Xerogel auf Teile mit dem gewünschten Durchmesser bringt.

Wie sich weiter gezeigt hat, läßt sich das erfindungsgemäße Verfahren ebenfalls mit besonderem Erfolg durchführen, wenn ein Chromtrioxid-Katalysator eingesetzt wird, der auf einem Trägerstoff (1) basiert, den man erhält, indem man in der zweiten Stufe (2) den Trägerstoff aus einer 0,05- bis 5-gew.%igen Lösung von Chromtrioxid in einem $C_3$- bis $C_5$-Alkanon oder einer 0,05- bis 15-gew.%igen Lösung einer unter den Bedingungen der Stufe (3) in Chromtrioxid übergehenden Chromverbindung in einem $C_1$- bis $C_4$-Alkanol - wobei das jeweilige Lösungsmittel nicht mehr als 20, vorzugsweise nicht mehr als 5, Gew.% Wasser enthalten darf - heraus unter Verdampfen des Lösungsmittels mit der geforderten Menge Chrom belädt.

Schließlich hat sich gezeigt, daß es für den Erfolg des erfindungsgemäßen Verfahrens optimal ist, mit einem Chromtrioxid-Katalysator zu arbeiten, der auf dem vorerwähnten besonders hergestellten Trägerstoff (1) basiert, der seinerseits in Stufe (2) auf die oben geschilderte spezielle Weise beladen worden ist. Das entsprechende Polymerisationsverfahren ist in der US-PS 4 037 042 beschrieben und soll über den Weg des Zitats ein Teil der Offenbarung der vorliegenden Erfindung sein.

Zu dem beim erfindungsgemäßen Verfahren einzusetzenden Chromtrioxid-Katalysator ist im einzelnen noch das Folgende zu sagen:

Der Katalysator kann ein für die Polymerisation von $\alpha$-Monoolefinen einschlägig üblicher sein und muß insoweit mit keiner Besonderheit verbunden sein. Solche Katalysatoren sind im Handel erhältlich; sie können zweckmäßigerweise auf einem Trägerstoff (1) basieren, der aus Siliziumdioxid besteht, das bis zu 15 Gewichtsprozente eines oder mehrerer Oxide der Elemente Aluminium, Titan, Zirkon, Molybdän oder Vanadin enthalten kann.

Im Rahmen der Erfindung wird der Einsatz eines Chromtrioxid-Katalysators bevorzugt, der auf einem Trägerstoff (1) basiert, der - wie oben umschrieben - in vier Stufen (1.1) bis (1.4) erhalten wird.

Zu diesen Stufen ist das Nachstehende zu bemerken:

(1.1) Charakteristisch für diese Stufe ist, daß eine Kieselsäure-Hydrogel eingesetzt wird, das einen relativ hohen Feststoffgehalt hat, weitgehend kugelförmig ist und -insbesondere - auf eine spezielle Weise hergestellt worden ist. Diese spezielle Weise der Herstellung ist in ihren Unterstufen (1.1.1), (1.1.2) sowie (1.1.3) im einzelnen beschrieben, z.B. in der US-PS 3,872,217; eine Beschreibung der gleichen Unterstufen und zusätzlich der Unterstufe (1.1.4) findet sich z.B. in der US-PS 4,037,042. Das insoweit in den beiden genannten Patentschriften Offenbarte soll, auf dem Wege über das Zitat, ein Bestandteil der vorliegenden Beschreibung sein; - womit in dieser einschlägige nähere Darlegungen entbehrlich werden.

(1.2) Die Extraktion des Wassers aus dem Kieselsäure-Hydrogel mittels der oben bezeichneten organischen Flüssigkeit kann in üblichen Extraktionsvorrichtungen erfolgen. Geeignete Vorrichtungen sind z.B. Säulenextraktoren. Als organische Flüssigkeiten haben sich aus der Reihe der Alkanole die folgenden (nach abnehmender Wirksamkeit - nicht jedoch nach abnehmender Wirtschaftlichkeit - geordnet) bewährt: tert.-Butanol, i-Propanol, Ethanol und Methanol. Aus der Reihe der Alkanone - die insgesamt gegenüber den Alkanolen zu bevorzugen sind - hat sich vor allem Aceton bewährt. Es versteht sich von selbst, daß die organische Flüssigkeit aus einem oder mehreren der in Betracht kommenden Individuen bestehen kann, wobei in jedem Fall die Flüssigkeit vor dem Extrahieren weniger als 5 und vorzugsweise weniger als 3 Gew.% Wasser enthalten sollte.

(1.3) Die Überführung des mit der organischen Flüssigkeit behandelten Gels in das Xerogel (Trocknung) kann wiederum in einschlägig üblichen Trocknungsvorrichtungen erfolgen. Dabei erhält man die besten Ergebnisse, wenn man bei Produkttemperaturen von 80 bis 200° C und Drücken von 1 bis 250 Torr trocknet, wobei man - aus Gründen des Dampfdruckes - einer steigenden Temperatur auch einen steigenden Druck zuordnen sollte et vice versa. Durch strömende Schleppgase, etwa Stickstoff, kann der Trocknungsvorgang - insbesondere bei relativ hohen Drücken - beschleunigt werden.

(1.4) Das Gewinnen von Xerogel-Teilchen mit einem bestimmten Durchmesser ist an sich mit keiner Besonderheit verbunden. Es kann z.B. in einfacher Weise erfolgen, indem man das aus Stufe (1.3) erhaltene Produkt mahlt und durch Sieben fraktioniert.

Wie der Trägerstoff (1) in der zweiten Stufe (2) der Katalysatorherstellung mit Chromtrioxid oder einer unter den Bedingungen der Stufe (3) in Chromtrioxid übergehenden Chromverbindung beladen wird, ist nicht generell kritisch; d.h. die Beladung kann in einschlägig üblicher Weise erfolgen. Im Rahmen der Erfindung wird jedoch ein Katalysator bevorzugt, bei dem die Beladung in spezieller - oben beschriebener - Weise erfolgt ist.

Bei dieser speziellen Weise der Beladung kann man zweckmäßigerweise so verfahren, daß man den Trägerstoff (1) in einer Lösung von Chromtrioxid oder einer unter den Bedingungen der Stufe (3) in Chromtrioxid übergehenden Chromverbindung suspendiert (wobei die Mengen so gewählt werden, daß das gewünschte Mengenverhältnis Trägerstoff : Chrom sich ergibt) und unter dauernder, möglichst homogener Durchmischung des Ansatzes dessen flüssige Bestandteile - also Alkanon bzw. Alkanol sowie gegebenenfalls Wasser - abdampft. Hierbei ist es am zweckmäßigsten, bei Temperaturen von 20 bis 150° C und Drücken von 10 bis 760 Torr zu arbeiten. Nicht kritisch ist, wenn der mit der Chromkomponente beladene Trägerstoff noch eine gewisse Restfeuchte enthält (flüchtige Bestandteile nicht mehr als 20, insbesondere nicht mehr als 10 Gew.%, bezogen auf den Trägerstoff). - Im gegebenen Zusammenhang geeignete Chromkomponenten sind vor allem Chromtrioxid sowie Chromhydroxid, ferner lösliche Salze des dreiwertigen Chroms mit einer organischen oder anorganischen Säure, wie Acetat, Oxalat, Sulfat, Nitrat; besonders geeignet sind solche Salze derartiger Säuren, die beim Aktivieren rückstandsfrei in Chromtrioxid übergehen. Auch können Chromverbindungen in Form von Chelaten eingesetzt werden, wie Chromacetylacetonat.

Die dritte Stufe (3) der Herstellung des Chromtrioxid-Katalysators dient dessen Aktivierung; sie kann in einschlägig üblicher - aus Literatur und Praxis wohlbekannter - Weise durchgeführt werden, d.h. insbesondere unter Bedingungen, die gewährleisten, daß im fertigen Katalysator das Chrom - zumindest teilweise - im sechswertigen Zustand vorliegt.

Kennzeichnendes Merkmal des erfindungsgemäßen Verfahren ist, daß der im Vorstehenden beschriebene und an sich bekannte Chromtrioxid-Katalysator unter zusätzlicher Mitverwendung eines Lithiumalkyls der oben näher definierten Formel als Cokatalysator eingesetzt wird.

Namentliche Beispiele für besonders gut geeignete Cokatalysatoren der bezeichneten Art sind n-Butyllithium, sec.-Butyllithium und tert.-Butyllithium.

Zu dem erfindungsgemäßen Verfahren als Ganzem ist schließlich das Folgende zu bemerken: Das Polymerisationsverfahren als solches kann - unter Beachtung der kennzeichnenden Besonderheit - in praktisch allen einschlägig üblichen technologischen Ausgestaltungen durchgeführt werden, etwa als diskontinuierliches, taktweises oder kontinuierliches Verfahren, sei es z.B. als Suspensions-Polymerisationsverfahren oder Trockenphasen-Polymerisationsverfahren. Die erwähnten technologischen Ausgestaltungen - mit anderen Worten: die technologischen Varianten der Polymerisation von Olefinen nach Phillips - sind aus der Literatur und Praxis wohlbekannt, so daß sich nähere Ausführungen zu ihnen erübrigen. Zu bemerken ist allenfalls noch, daß die Katalysatoren außerhalb oder innerhalb des Polymerisationsgefäßes mit den Cokatalysatoren zusammengebracht werden können; im letzgenannten Fall etwa durch räumlich getrennten Eintrag der Komponenten, die im übrigen im Form einer Suspension (Katalysator) bzw. Lösung (Cokatalysator) gehandhabt werden können.

Des weiteren ist noch zu sagen, daß sich das neue Verfahren vornehmlich zum Herstellen von Homopolymerisaten des Ethens oder Copolymerisaten des Ethens mit α-Monoolefinen wie Propen, Buten-1, Hexen-1, 4-Methylpenten-1 und Okten-1 mit einer sehr hohen bis mittleren, mittels Wasserstoff regelbaren Molmasse sowie einem geringen Feinstaubanteil und hohem Schüttgewicht in hoher Ausbeute, bezogen auf die eingesetzte Katalysatormenge (hohe Produktivität), eignet, also Polymerisaten, wie sie z.B. beim Blasformverfahren besondere Anwendung finden. Das Anspringen der Polymerisation im Reaktor erfolgt beim erfindungsgemäßen Verfahren besonders problemlos.

Beispiel 1

Herstellung des Trägerstoffs (Xerogel)

Es wurde eine in der Figur 1 der US-PS 3,872,217 dargestellte Mischdüse mit folgenden Daten benutzt: Der Durchmesser der zylindrischen, aus einem Kunststoffschlauch gebildeten Mischkammern betrug 14 mm, die Mischraumlänge (einschließlich Nachmischstrecke) 350 mm. Nahe der stirnseitig verschlossenen Eintrittsseite der Mischkammer war eine tangentiale Einlaufbohrung von 4 mm Durchmesser für die Mineralsäure angebracht. Es schlossen sich vier weitere Bohrungen mit ebenfalls 4 mm Durchmesser und gleicher Einlaufrichtung für die Wasserglaslösung an, wobei der Abstand der Bohrungen voneinander, in Längsrichtung der Mischkammer gemessen, 30 mm betrug. Für die primäre Mischzone war demnach das Verhältnis von Länge zu Durchmesser etwa gleich 10. Für die sich anschließende sekundäre Mischzone lag dieses Verhältnis bei 15. Als Spritzmundstück wurde ein flachgedrücktes, leicht nierenförmig ausgebildetes Rohrstück über das Austrittsende des Kunststoffschlauches geschoben.

Beschickt wurde diese Mischvorrichtung mit 325 l/h 33-gew.%iger Schwefelsäure von 20°C mit einem Betriebsdruck von ca. 3 bar sowie 1100 l/h Wasserglaslösung (hergestellt aus technischem Wasserglas mit 27 Gew.% $SiO_2$ und 8 Gew.% $Na_2O$ durch Verdünnung mit Wasser) mit einem Litergewicht von 1,20 kg/l und einer Temperatur von ebenfalls 20°C mit einem Druck von ebenfalls ca. 3 bar. In der mit dem Kunststoffschlauch ausgekleideten Mischkammer wurde durch fortschreitende Neutralisation ein unbeständiges Hydrosol mit einem pH-Wert zwischen 7 und 8 gebildet, das bis zur vollständigen Homogenisierung noch etwa 0,1 Sekunden in der Nachmischzone verblieb, bevor es durch das Düsenmundstück als flächenförmiger Flüssigkeitsstrahl in die Atmosphäre gespritzt wurde. Der Strahl zerteilte sich während des Fluges durch die Luft in einzelne Tropfen, die infolge der Oberflächenspannung in eine weitgehend kugelige Form übergingen und die noch während ihres Fluges innerhalb ca. einer Sekunde zu Hydrogel-Kugeln erstarrten. Die Kugeln hatten eine glatte Oberfläche, waren glasklar, enthielten etwa 17 Gew.% $SiO_2$ und hatten folgende Kornverteilung:

| | |
|---|---|
| >8 mm | 10 Gewichtsprozent |
| 6 - 8 mm | 45 Gewichtsprozent |
| 4 - 6 mm | 34 Gewichtsprozent |
| <4 mm | 11 Gewichtsprozent |

Die Hydrogel-Kugeln wurden am Ende ihres Fluges in einem Waschturm aufgefangen, der nahezu vollständig mit Hydrogel-Kugeln gefüllt war, und in dem die Kugeln sofort ohne Alterung mit ca. 50°C warmem, schwach ammoniakalischem Wasser in einem kontinuierlich verlaufenden Gegenstromprozeß salzfrei gewaschen wurden.

Durch Sieben isolierte man die Kugeln, die einen Durchmesser im Bereich von 2 bis 6 mm hatten und füllte 112 kg dieser Kugeln in ein Extraktionsfaß mit Zulauf an der Oberseite, einem Siebboden und einem schwanenhalsförmigen Überlauf, welcher an der Faßunterseite angeschlossen war und den Flüssigkeitsstand im Faß so hoch hielt, daß die Hydrogel-Kugeln vollkommen mit Flüssigkeit bedeckt waren. Dann ließ man solange Ethanol mit einer Geschwindigkeit von 60 l/h zulaufen, bis die Dichte des am Überlauf austretenden Ethanol-Wassergemisches bis 0,826 $g/cm^3$ gesunken war; es waren dann etwa 95 % des in dem Hydrogel enthaltenen Wassers extrahiert.

Die dabei erhaltenen Kugeln wurden bei 180°C unter einem Vakuum von 10 Torr 8 Stunden lang getrocknet; es trat dann unter den genannten Bedingungen während 30 Minuten kein Gewichtsverlust mehr auf.

Anschließend wurden die getrockneten Kugeln gemahlen und durch Sieben die Xerogel-Teile isoliert, die Durchmesser von 250 bis 300 $\mu$m hatten.

Herstellung des Katalysators

15 kg des oben beschriebenen Xerogels und 40 Liter einer etwa 1-gew.%igen Lösung von Chromtrioxid in Aceton wurden in einen Doppelkonusmischer gefüllt. Unter Rotation des von außen mit Dampf auf 110°C beheizten Mischers wurde dann im Wasserstrahlvakuum das Aceton abdestilliert.

Das dabei resultierende Produkt wurde in einem Fließbett, welches von Luft durchströmt wurde, für 4 Stunden auf eine Temperatur von 890°C erhitzt und dann wieder abgekühlt. Ab 140°C wurde das Fließbett von Stickstoff durchspült, um Sauerstoffspuren (die bei der Polymerisation stören) zu beseitigen.

Der so gewonnene Katalysator hatte einen analytisch ermittelten Chromgehalt von rund 0,0002 mol/g.

Polymerisation

Es wurde in einem 10-l-Druckautoklaven gearbeitet. Dieser wurde auf 102°C aufgeheizt und mehrmals mit Ethen gespült. Unter Rühren wurden dann 5 l i-Butan und 5 ml einer 10 g n-Butyllithium pro l n-Heptan enthaltenden Lösung eingebracht. Nach Erreichen der gewünschten Reaktionstemperatur von 102°C wurden 270 mg des oben beschriebenen Katalysators mittels Stickstoff so eingeschossen, daß der Druck im Autoklaven vor der Ethenzugabe 25 bar betrug. Das gewählte Atomverhältnis von Chrom im Katalysator zu Lithium im Cokatalysator entsprach demnach 1 : 15.

Danach wurde Ethen bis zu einem Gesamtdruck von 42 bar aufgepreßt und bei konstanter Reaktionstemperatur entsprechend dem Fortschreiten der Polymerisation im Druckintervall 40 bis 42 bar nachgepreßt. Die Polymerisation wurde nach einer Reaktionszeit von 90 Minuten durch Entspannen abgebrochen.

Es wurden 1580 g grießförmiges Polymerisat erhalten, entsprechend einer Productivität von 5850 g Polyethylen/g Katalysator.

Das Polyethylen hatte folgende Kenndaten:
HL-Schmelzindex (HLMI 190°C/21,6 kp, nach DIN 53 735)    10,9 g/10 min.
Grenzviskosität [$\eta$] (nach DIN 53 733)    2,9 dl/g
Schüttgewicht (nach DIN 53 468)    395 g/l
Feinanteile    <125    µm    (nach    Siebanalyse)- 0,2 %

Vergleichsversuch 1

Es wurde in Identität zum Beispiel 1 (auch hinsichtlich der Messung der Kenndaten) gearbeitet, mit der einzigen Ausnahme, daß als Cokatalysator Diethylaluminiumethoxid eingesetzt wurde. Dabei wurde das Atomverhältnis von Chrom im Katalysator zu Aluminium im Cokatalysator wie im Beispiel 1 gewählt.

Auf diese Weise entstanden 930 g Polymerisat mit folgenden Kenndaten:
HL-Schmelzindex    15,9 g/10 min.
Grenzviskosität [$\eta$]    2,8 dl/g
Schüttgewicht    170 g/l
Feinanteile <125 µm    1,2 %

Im Vergleichsversuch wird also ein Polymerisat mit erheblich niedrigerem Schüttgewicht sowie stark erhöhten Anteilen an Feinstaub (<125 µm) erhalten.

Beispiel 2

Es wurde in Identität zum Beispiel 1 gearbeitet, mit der einzigen Ausnahme, daß bei der Herstellung des Katalysators auf eine Temperatur von 750°C anstelle von 890°C erhitzt wurde.

Auf diese Weise wurden 1320 g Polymerisat mit folgenden Kenndaten erhalten:
HL-Schmelzindex    2,7 g/10 min.
Grenzviskosität [$\eta$]    3,6 dl/g
Schüttgewicht    394 g/l

Beispiel 3

Es wurde in Identität zum Beispiel 2 gearbeitet, mit der einzigen Ausnahme, daß bei der Polymerisation vor dem Aufpressen des Ethens zusätzlich 10 l Wasserstoff eingeleitet wurden.

Es entstanden so 1490 g Polyethylen mit folgenden Kenndaten:
HL-Schmelzindex    6,2 g/10 min.
Grenzviskosität [$\eta$]    3,3 dl/g
Schüttgewicht    473 g/l

Durch die Wasserstoffzugabe wird also der HL-Schmelzindex gegenüber Beispiel 2 mehr als verdoppelt.

**Patentansprüche**

1. Verfahren zum Herstellen von Ethen-Homopolymerisaten sowie Ethen-Copolymerisaten mit untergeordneten Mengen an einpolymerisierten $C_3$- bis $C_{12}$-$\alpha$-Monoolefinen durch Polymerisation des bzw. der Monomeren bei Temperaturen von 30 bis 150°C und Drücken von 2 bis 150 bar, mittels eines Chromtrioxid-Katalysators, der erhalten wird, indem man

(1) einen feinteiligen, porösen, aus Siliziumdioxid bestehenden bzw. auf Siliziumdioxid basierenden Trägerstoff mit
(2) Chromtrioxid oder einer unter den Bedingungen der Stufe (3) in Chromtrioxid übergehenden Chromverbindung im Gewichtsverhältnis Trägerstoff : Chrom von 100 : 0,1 bis 100 : 10 belädt, und dann
(3) das aus Stufe (2) resultierende Zwischenprodukt in einem wasserfreien, Sauerstoff in einer Konzentration von über 10 Volumenprozent enthaltenden Gasstrom 10 bis 1000 Minuten auf einer Temperatur von 400 bis 1100°C hält,

dadurch gekennzeichnet, daß zusätzlich zum Chromtrioxid-Katalysator ein Cokatalysator eingesetzt wird, der besteht aus einem Lithiumalkyl der Formel LiR, worin R steht für eine $C_2$- bis $C_6$-Alkylgruppe, mit der Maßgabe, daß das Atomverhältnis Chrom im Chromtrioxid-Katalysator : Lithium im Cokatalysator 1 : 0,05 bis 1 : 100 beträgt.

2. Verfahren gemäß Anspruch 1, dadurch gekennzeichnet, daß ein Chromtrioxid-Katalysator eingesetzt wird, der auf einem Trägerstoff (1) basiert, den man erhält, indem man

(1.1) von einem 10 bis 25 Gew.% Feststoff (berechnet als Siliziumdioxid) enthaltenden Kieselsäure-Hydrogel ausgeht, das weitgehend kugelförmig ist, einen Teilchendurchmesser im Bereich von 1 bis 8 mm hat und erhalten wird, indem man

(1.1.1) in einen unter Drall stehenden Strom einer wäßrigen Mineralsäure längs sowie tangential zum Strom eine Natrium-bzw. Kaliumwasserglaslösung einbringt,

(1.1.2) das dabei entstehende Kieselsäure-Hydrosol in eine gasförmiges Medium tropfenförmig versprüht,

(1.1.3) das versprühte Hydrosol in dem gasförmigen Medium zum Hydrogel erstarren läßt und

(1.1.4) das so erhaltene weitgehend kugelförmige Hydrogel ohne vorherige Alterung durch Waschen von Salzen befreit,

(1.2) aus dem Hydrogel (1.1) mittels einer organischen Flüssigkeit aus der Reihe der $C_1$- bis $C_4$-Alkanole und/oder $C_3$- bis $C_5$-Alkanone mindestens 60 %, des in dem Hydrogel enthaltenen Wassers extrahiert,

(1.3) das dabei erhaltene entwässerte, mit der organischen Flüssigkeit behandelte Gel solange trocknet, bis bei 180° C unter einem Vakuum von 10 Torr während 30 Minuten kein Gewichtsverlust mehr auftritt (Xerogel-Bildung) und

(1.4) das so gewonnene Xerogel auf Teile mit dem gewünschten Durchmesser bringt.

3. Verfahren gemäß Patentansprüchen 1 sowie 2, dadurch gekennzeichnet, daß ein Chromtrioxid-Katalysator eingesetzt wird, der auf einem Trägerstoff (1) basiert, den man erhält, indem man in der zweiten Stufe (2) den Trägerstoff aus einer 0,05- bis 5-gew.%igen Lösung von Chromtrioxid in einem $C_3$- bis $C_5$-Alkanon oder einer 0,05- bis 15-gew.%igen Lösung einer unter den Bedingungen der Stufe (3) in Chromtrioxid übergehenden Chromverbindung in einem $C_1$-bis $C_4$-Alkanol - wobei das jeweilige Lösungsmittel nicht mehr als 20 Gew.% Wasser enthalten darf - heraus unter Verdampfen des Lösungsmittels mit der geforderten Menge Chrom belädt.

## Claims

1. A process for the preparation of ethene homopolymers and ethene copolymers with minor amounts of copolymerized $C_3$-$C_{12}$-α-monoolefins, by polymerization of the monomer or monomers at from 30 to 150° C and under from 2 to 150 bar using a chromium trioxide catalyst which is obtained if

(1) a finely divided, porous carrier consisting of silica or based on silica

(2) is laden with chromium trioxide, or a chromium compound which is converted to chromium trioxide under the conditions of stage (3), in a weight ratio of carrier to chromium of from 100:0.1 to 100:10, and then

(3) the intermediate resulting from stage (2) is kept at from 400 to 1,100° C, for from 10 to 1,000 minutes in an anhydrous gas stream containing oxygen in a concentration of more than 10% by volume,

wherein, in addition to the chromium trioxide catalyst, a cocatalyst is used which consists of a lithiumalkyl of the formula LiR, where R is $C_2$-$C_6$-alkyl, with the proviso that the atomic ratio of chromium in the chromium trioxide catalyst to lithium in the cocatalyst is from 1:0.05 to 1:100.

2. A process as claimed in claim 1, wherein a chromium trioxide catalyst is used which is based on a carrier (1) which is obtained by a method in which

(1.1) a silica hydrogel containing from 10 to 25 % by weight of solid (calculated as silica) is used as a starting material, the said hydrogel being substantially spherical, having a particle diameter of from 1 to 8 mm, and being obtained by a method in which

(1.1.1) a sodium or potassium waterglass solution is introduced into a stream of an aqueous mineral acid subjected to angular momentum, the introduction being carried out along or tangentially to the stream,

(1.1.2) the resulting silica hydrosol is sprayed in the form of drops into a gaseous medium,

(1.1.3) the sprayed hydrosol is allowed to solidify to the hydrogel in the gaseous medium, and

(1.1.4) the resulting substantially spherical hydrogel is freed from salts by washing, without prior aging,

(1.2) not less than 60% of the water present in the hydrogel is extracted from the hydrogel (1.1) by means of an organic liquid from the series consisting of the $C_1$-$C_4$-alkanols and/or $C_3$-$C_5$-alkanones,

(1.3) the resulting dewatered gel treated with the organic liquid is dried until there is no longer any weight loss at 180° C under a reduced pressure of 10 mm Hg in the course of 30 minutes (xerogel formation) and

(1.4) the xerogel thus obtained is converted to particles having the desired diameter.

3. A process as claimed in either of claims 1 and 2, wherein a chromium trioxide catalyst is used which is based on a carrier (1) which is obtained by a method in which, in the second stage (2), the carrier is laden with the required amount of chromium, with evaporation of the solvent, from a 0.05-5% strength by weight solution of chromium trioxide in a $C_3$-$C_5$-alkanone, or a 0.05-15% strength by weight solution of a chromium compound which is converted to chromium trioxide under the conditions of stage (3), in a $C_1$-$C_4$-alkanol, the relevant solvent being permitted to contain no more than 20% by weight of water.

## Revendications

1. Procédé de préparation d'homopolymères d'éthylène et de copolymères d'éthylène avec des quantités mineures d'α-monooléfines en $C_3$ à $C_{12}$ en liaison polymère, par polymérisation du ou des monomères à des températures de 30 à 150°C et sous des pressions de 2 à 150 bar, au moyen d'un catalyseur au trioxyde de chrome que l'on a obtenu

    (1) en chargeant une matière de support poreuse finement divisée, constituée par du dioxyde de silicium ou à base de dioxyde de silicium, de

    (2) trioxyde de chrome ou d'un composé du chrome se transformant en trioxyde de chrome dans les conditions de l'étape (3), dans un rapport pondéral de la matière de support au chrome de 100:0,1 à 100:10, puis

    (3) en maintenant le produit intermédiaire résultant de l'étape (2) pendant 10 à 1000 mn à une température de 400 à 1100°C dans un courant gazeux anhydre contenant de l'oxygène dans une concentration de plus de 10% en volume,

caractérisé en ce qu'on utilise, en plus du catalyseur au trioxyde de chrome, un co-catalyseur qui est constitué par un lithium-alkylke de formule LiR, dans laquelle R est mis pour un groupement alkyle en $C_2$ à $C_6$, étant spécifié que le rapport atomique du chrome contenu dans le catalyseur au trioxyde de chrome au lithium contenu dans le co-catalyseur se situe entre 1:0,05 et 1:100.

2. Procédé selon la revendication 1, caractérisé en ce qu'on utilise un catalyseur au trioxyde de chrome à base d'une matière de support (1) que l'on obtient

    (1.1) en partant d'un hydrogel d'acide silicique qui contient de 10 à 25% en poids de matière solide (calculés en tant que dioxyde de silicium), est sphérique dans une large mesure, a un diamètre de particules dans la gamme de 1 à 8 mm et est obtenu

    (1.1.1) en introduisant, dans un courant en giration d'un acide minéral aqueux, longitudinalement et tangentiellement par rapport à ce courant, une solution de silicate de sodium ou de potassium,

    (1.1.2) en pulverisant en forme de gouttes l'hydrosol d'acide silicique ainsi formé dans un milieu gazeux,

    (1.1.3) en laissant l'hydrosol pulvérisé se solidifier dans le milieu gazeux pour former un hydrogel et

    (1.1.4) en débarrassant des sels l'hydrogel de forme largement sphérique ainsi obtenu, par lavage sans vieillissement préalable,

    (1.2) en extrayant de l'hydrogel (1.1) au moins 60% de l'eau contenue dans l'hydrogel, au moyen d'un liquide organique de la série des alcanols en $C_1$ à $C_4$ et/ou des alcanones en $C_3$ à $C_5$,

    (1.3) en séchant le gel déshydraté et traité par le liquide organique ainsi obtenu, Jusqu'à ce qu'à 180°C sous un vide de 10 torr pendant 30 mn, il ne se produise plus de perte de poids (formation de xérogel) et

    (1.4) en réduisant le xérogel ainsi obtenu en éléments ayant le diamètre désiré.

3. Procédé selon la revendication 1 ou 2, caractérisé en ce qu'on utilise un catalyseur au trioxyde de chrome qui est à base d'une matière de support (1) et que l'on obtient en chargeant la matière de support, dans la deuxième étape (2), de la quantité requise de chrome à partir d'une solution à 0,05-5% en poids de trioxyde de chrome dans une alcanone en $C_3$ à $C_5$ ou à partir d'une solution à 0,05-15% en poids d'un composé du chrome se transformant en trioxyde de chrome dans les conditions de l'étape (3) dans un alcanol en $C_1$ à $C_4$ - le solvant utilisé dans un cas comme dans l'autre ne devant pas contenir plus de 20% en poids d'eau - par évaporation du solvant.